# EUROPEAN PATENT APPLICATION

(11) **EP 1 870 607 A1**
(43) Date of publication of application: **26.12.2007**
(21) Application number: 07110430.1
(22) Date of filing: 18.06.2007
(51) Int. Cl.: F16C 33/10

(54) **Sliding Structure**

(30) Priority: 20.06.2006 JP 2006170305; 16.04.2007 JP 2007107141
(71) Applicant: Nissan Motor Company Limited, Kanagawa-ku Yokohama-shi, Kanagawa 221-0023 (JP)
(72) Inventor: Nanbu, Toshikazu, Atsugi-shi Kanagawa 243-0192 (JP); Yasuda, Yoshiteru, Atsugi-shi Kanagawa 243-0192 (JP); Koizuka, Yousuke, Atsugi-shi Kanagawa 243-0192 (JP); Sakane, Tokio, Atsugi-shi Kanagawa 243-0192 (JP)
(74) Representative: Holmes, Matthew William

(57) **Abstract**

A sliding structure is provided with at least a first sliding member that has a sliding surface and a plurality of micro-recessed parts with bottom surfaces having a maximum depth point spaced from the sliding surface to define a plurality of recesses. Each bottom surfaces includes a concaved portion extending rearward with respect to a sliding direction from the maximum depth point. Each micro-recessed part has a cross-sectional shape in the sliding direction having an S/L ratio of 0 to 0.3, where L is an overall length of the micro-recessed part with respect to the sliding surface in the sliding direction and S is a length from a forward edge of the micro-recessed part with respect to the sliding surface in the sliding direction to the maximum depth point. The sliding member slide with respect to another sliding member with a viscous fluid interposed therebetween.

## Description

The present invention generally relates to a sliding structure and particularly, but not exclusively, to a sliding structure having a first sliding member that is caused to slide via a viscous fluid with respect to a second sliding member. Aspects of the invention relate to an apparatus, to a structure, to an engine, to a transmission and to a vehicle.

In the past, very fine indentations, recesses, grooves or the like have been formed in the sliding surfaces of sliding members that are caused to slide via a viscous fluid such as oil or the like in order to reduce the friction in the sliding members. As one example of such a conventional technique, there is a sliding member that is used to reduce friction in which very fine recesses whose depths are varied in the sliding direction are formed in the sliding surface.

It has been discovered that in this conventional sliding member as well, even though a reduction in friction can be realized, there is a demand for a further reduction in friction.

It is an aim of the invention to address this issue and to improve upon such known technology. Embodiments of the invention may provide an outer surface of a sliding member with a plurality of micro-recessed parts for reducing the coefficient of friction generated between sliding parts in which a viscous fluid is disposed between the sliding parts. Other aims and advantages of the invention will become apparent from the following description, claims and drawings.

Aspects of the invention therefore provide an apparatus, an engine, a transmission and a vehicle as claimed in the appended claims.

According to another aspect of the invention there is provided a sliding structure comprising a first sliding member having a sliding surface and a plurality of recesses with bottom surfaces having a maximum depth point with respect to the sliding surface, wherein each of the bottom surfaces includes a concaved portion extending rearward with respect to a sliding direction from the maximum depth point.

According to a further aspect of the invention there is provided a sliding structure comprising a first sliding member having a sliding surface, and a plurality of micro-recessed parts with bottom surfaces having a maximum depth point spaced from the sliding surface to define a plurality of recesses, each of the bottom surfaces including a concaved portion extending rearward with respect to a sliding direction from the maximum depth point, each of the micro-recessed parts having a cross-sectional shape in the sliding direction has an S/L ratio of 0 to 0.3, where L is an overall length of the micro-recessed part with respect to the sliding surface in the sliding direction and S is a length from a forward edge of the micro-recessed part with respect to the sliding surface in the sliding direction to the maximum depth point.

In an embodiment, the micro-recessed parts have a transverse width perpendicular to the sliding direction that is longer than the overall length in the sliding direction.

In an embodiment, the sliding surface occupies a first surface area and the micro-recessed parts occupy a second surface area such that a ratio of the second surface area occupied by the micro-recessed parts to the first surface area occupied by the sliding surface is from 0.5 % to 10%.

The structure may comprise a second sliding member having a mating sliding surface, the sliding surface of the first sliding member being formed of material with a higher hardness value than a material of the mating sliding surface of the second sliding member.

In an embodiment, the cross-sectional shapes of the micro-recessed parts are formed so that a ratio h/t is 0.04 to 5, where t is a maximum depth of the micro-recessed parts, and h is a film thickness of a viscous fluid formed during sliding of the sliding surface of the first sliding member.

In an embodiment, the concaved portions of the micro-recessed parts have shapes formed by plastic deformation of the sliding surface with a tool having a tip that protrudes in a center.

According to another aspect of the invention there is provided an internal combustion engine with a sliding structure as described above wherein the first sliding member is a sliding part in the internal combustion engine.

According to yet another aspect of the invention there is provided a transmission having a sliding structure as described above wherein the first sliding member is a sliding part in the transmission.

For example, a sliding structure may comprise at least a first sliding member. The first sliding member has a sliding surface and a plurality of micro-recessed parts with bottom surfaces having a maximum depth point spaced from the sliding surface to define a plurality of recesses. Each of the bottom surfaces includes a concaved portion extending rearward with respect to a sliding direction from the maximum depth point. Each of the micro-recessed parts has a cross-sectional shape in the sliding direction has an S/L ratio of 0 to 0.3, where L is an overall length of the micro-recessed part with respect to the sliding surface in the sliding direction and S is a length from a forward edge of the micro-recessed part with respect to the sliding surface in the sliding direction to the maximum depth point.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a side elevational view of an engine and a transmission in which both have sliding structures in accordance with one embodiment of the present invention;
Figure 2 is a perspective view of a sliding member (a portion cut away) in accordance with one embodiment of the present invention;
Figure 3 is a partial perspective view of a portion of a sliding surface of the sliding member showing a micro-recessed part formed in the sliding surface of one of the sliding members;
Figure 4 is a cross sectional view of the portion of a sliding surface of the sliding member in Figure 3 as seen along section line 4-4 in Figure 3 to show the cross-sectional shape of the micro-recessed parts in the working examples;
Figure 5 is a cross sectional view, similar to Figure 4, of a portion of a sliding surface of a sliding member showing a cross-sectional shape of a micro-recessed part in a Comparative Example 1;
Figure 6 is a cross sectional view, similar to Figure 4, of a portion of a sliding surface of a sliding member showing a cross-sectional shape of a micro-recessed part in a Comparative Example 2;
Figure 7 is a series of actual measured cross-sectional shapes (a) to (c) of the micro-recessed parts manufactured using different manufacturing techniques;
Figure 8 is an enlarged partial view of the portion of the sliding surface of the sliding member showing the formation pattern of the micro-recessed parts shown in Figure 4 in the sliding surface; and
Figure 9 is a graph showing the relationship between the S/L ratio in the respective micro-recessed part shapes shown in Figure 7 and the reduction rate (%) in the coefficient of friction.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

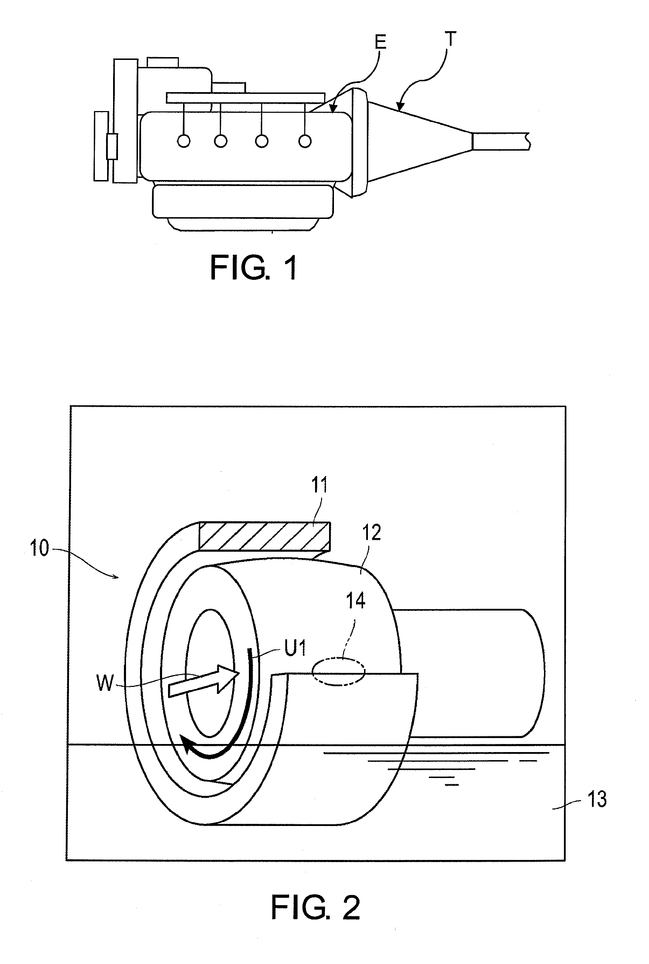

Referring initially to Figure 1 is a side elevational view of an internal combustion engine E and a transmission T is illustrated. Both the engine E and the transmission T have a sliding structure 10 (Figure 2) in accordance with one embodiment of the present invention. The sliding structure 10 is suitable for use in sliding members that are caused to slide in one direction with a viscous fluid interposed between these sliding members and other sliding members. Thus, the sliding structure 10 is used in crankshafts and cam shafts of the internal combustion engine E and shafts of the transmission T.

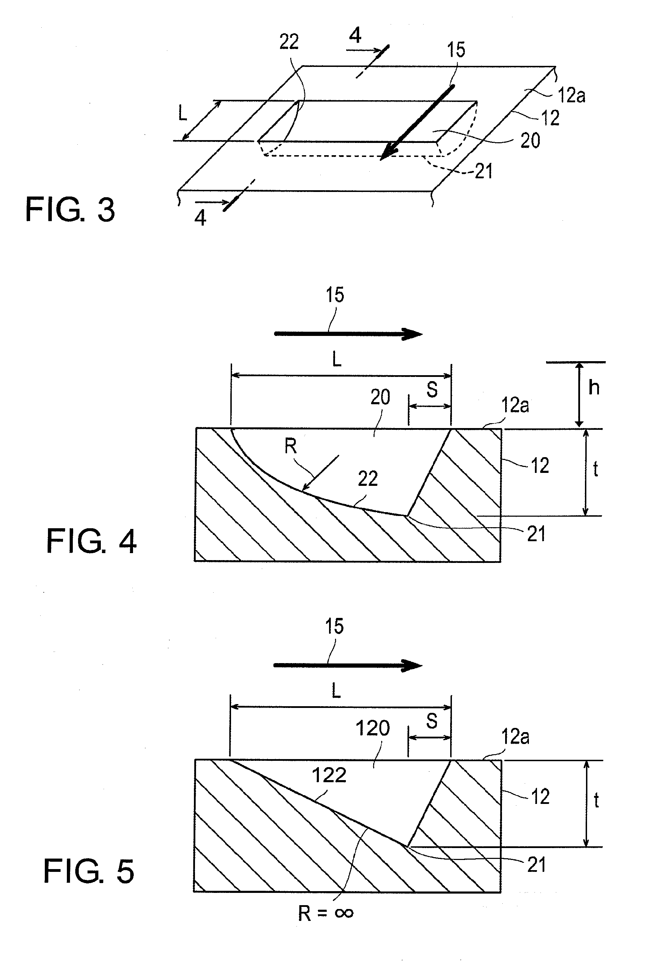

In Figure 2, a portion of the sliding structure 10 is cut away for purpose of illustration. Figure 3 is a perspective view showing a micro-recessed part 20 formed in the sliding surface. Figure 4 is a sectional view along line 4-4 in Figure 3.

Basically, in the illustrated embodiment, the sliding structure 10 includes a first member 11 and a second member 12 with a lubricating oil 13, as a viscous fluid, for lubricating an interface or contact region 14 between the first and second members 11 and 12. Thus, the first and second members 11 and 12 are slidably coupled with the lubricating oil 13 creating a film therebetween to allow relative sliding movement. The first and second members 11 and 12 have a cylindrical shape. In particular, in the contact region 14 indicated by a dotted line in the center of Figure 2, an outer surface of the second member 12 and an inner surface of the first member 11 slide with the lubricating oil 13 interposed therebetween. The second member 12 rotates with respect to the first member 11 in the direction indicated by an arrow U1. An arrow W in the center of the Figure 2 indicates a radial load that acts on the second member 12.

As seen in Figures 3 and 4, at least one sliding surface of the sliding structure 10 (e.g., an outer surface 12a of the second member 12) is provided with a plurality of micro-recessed parts 20. The micro-recessed parts 20 define shallow recesses or grooves in the outer surface 12a of the second member 12 that function as lubricating oil holding parts (oil reservoirs). The shape of the micro-recessed parts 20 shall now be described.

The arrow 15 in Figure 3 indicates the sliding direction of the micro-recessed part 20, and the symbol "t" indicates a depth of a deepest part or point of the micro-recessed part 20. The micro-recessed part 20 has a length L formed in the outer surface 12a of the second member 12, with the deepest (maximum depth) point 21 of a bottom surface 22 of the micro-recessed part 20 being located at a distance S from a leading or forward edge in the sliding direction. In a case where the cross section of the micro-recessed part 20 has a S/L ratio in a range of 0 to 0.3, the groove bottom surface 22 in the rear part of the micro-recessed part 20 with respect to the sliding direction is gouged out more deeply (see Figure 4) than a flat surface (see Figure 5) extending from the outer surface 12a of the second member 12, to the deepest (maximum depth) point 21 of the bottom surface 22. Thus, the groove bottom surface 22 has a concaved curve shape that is recessed downwardly relative to the outer surface 12a of the second member 12 as seen in Figure 4.

By setting the value of the S/L ratio at 0 to 0.3, it is possible to obtain a superior effect which reduces a shear rate due to an increase in the geometrical average oil film thickness caused by the very fine micro-recessed parts 20. This S/L ratio (0 to 0.3) of the micro-recessed part 20 also results in an increase in a microscopic dynamic pressure effect due to an increase in the oil film thickness and a decrease in the coefficient of friction.

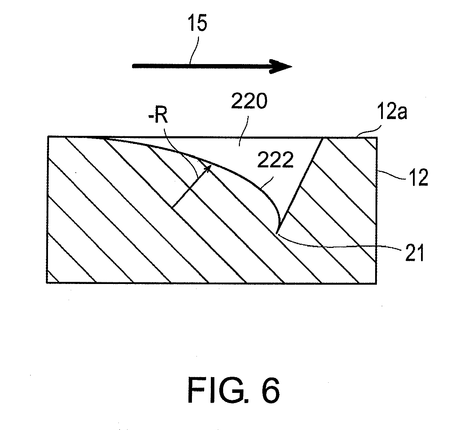

Furthermore, as a result of the groove bottom surfaces 22 of the rear portions of the micro-recessed parts 20 in the sliding direction being formed with a shape that is recessed downward, the volume of the micro-recessed parts 20 is greater than when the groove bottom surfaces 22 have a shape that protrudes upward (see Figure 6 described later). As a result of the increased micro-dynamic pressure effect created by the micro-recessed parts 20, a superior effect is obtained in which the oil film becomes thicker, and the coefficient of friction is reduced.

Here, as seen in Figure 3, it is desirable that the shape of the micro-recessed parts 20 include an elongated surface opening that is longer in the direction perpendicular to the sliding direction 15 than in the sliding direction 15. The elongated surface opening is not limited to a rectangular shape, and can also be an oval shape or a polygonal shape. As a result of the shape of the micro-recessed parts 20 as seen from the sliding surface being an elongated surface opening that is longer in the direction perpendicular to the sliding direction 15, a large quantity of lubricating oil 13 can be caused to flow into the sliding area, and a reduction in friction can be achieved.

It is desirable that the ratio of the surface area occupied by the micro-recessed parts 20 in the sliding surface 12a be 0.5 to 10%. In cases where this ratio is smaller than 0.5%, the effect of enclosing oil in the micro-recessed parts 20 is insufficient, and there is a danger that the friction-reducing effect will be inadequate. On the other hand, in cases where this ratio exceeds 10%, the load capacity is made to decrease, metal contact tends to occur, and the risk arises that friction will not be adequately reduced.

In cases where the hardness of the sliding surfaces differs between the two sliding objects (e.g., the first and second members 11 and 12), it is desirable that the micro-recessed parts 20 be formed in the sliding surface having the higher hardness. The shape of the micro-recessed parts 20 can then be maintained over a long period of time, and a reduction of friction can be achieved over a long period of time.

It is desirable that the micro-recessed parts 20 be formed so that the ratio h/t of the micro-recessed parts 20 be 0.04 to 5, where "h" is the thickness of the viscous fluid film on the sliding surface during sliding, and "t" is the depth of the micro-recessed parts 20. In cases where this ratio h/t is smaller than 0.04, a sufficient oil film cannot be ensured, and metal contact occurs. Accordingly, there is a danger that the friction-reducing effect will not be inadequate. On the other hand, if this ratio h/t exceeds 5, the thickness of the oil film becomes too large relative to the depth of the micro-recessed parts 20. Consequently, the risk arises that friction will not be adequately reduced.

It is desirable that the micro-recessed parts 20 be formed by plastic working using a tool having a blade tip with a curved shape that protrudes in the center. It thus becomes possible to form the cross-sectional shape of the micro-recessed parts 20 in an appropriate manner as seen in Figures 2 and 3.

The sliding structure 10 is especially useful, for example, as one or more of the sliding parts of a transmission. By using the sliding structure 10, which adequately reduces friction, it is possible to reduce the coefficient of friction in the sliding parts of the transmission.

Next, on the basis of an embodiment constructed as described above, actual sliding members having various micro-recessed part shapes were manufactured, and experiments for determining the coefficient of friction were performed. As shown in Figure 2, the sliding members used in the experiment comprised an outer cylinder constituting the first member 11, and an inner cylinder constituting the second member 12.

The outer cylinder (the first member 11) is a cylinder having an inner aluminum cylinder cylindrical portion that is press-fitted into an outer steel cylindrical portion. The outer cylinder (the first member 11) has an internal diameter of 45 mm and an external diameter of 60 mm. Meanwhile, the inner cylinder (the second member 12) is a carbon-impregnated steel material (SCM420H) having an external diameter of 43 mm and an axial curvature radius R of 700 mm. The steel materials of the outer and inner cylinders have been quenched and tempered. Both the inner cylinder and outer cylinder have a width of 20 mm.

In the experiment, AC servo motors (not shown) are attached to the inner and outer cylinders respectively, such that the rotation of the cylinders can be independently controlled. Furthermore, these inner and outer cylinders are immersed in an oil bath containing 5W30 oil, so that an oil film forms between the inner cylinder and outer cylinder.

In the experiment, the rotational torque is measured using a torque sensor attached to the shaft of the inner cylinder, and the tangential force is calculated at a radial load of 20 kg, an oil temperature of 80°C, a relative slipping rate of 6 m/s, and a mean velocity of 3 m/s. The coefficient of friction is determined by dividing the tangential force by the radial load.

Figure 5 is a cross sectional view showing the cross-sectional shape of the micro-recessed parts 120 in a comparative example 1. Figure 6 is a cross sectional view showing the cross-sectional shape of the micro-recessed parts 220 in a comparative example 2.

In the working examples 1 through 3 and the comparative examples 1 and 2, the micro-recessed parts were formed in the surface of an inner cylinder having a diameter of 43 mm. In working examples 1 through 3, the micro-recessed parts were formed as substantially shown seen in Figures 2 and 3. On the other hand, in the comparative examples 1 and 2, the micro-recessed parts formed as substantially shown seen in Figures 4 and 5, respectively. These micro-recessed parts were formed by plastic working. The micro-recessed parts of the working examples were formed by plastic deforming using a tool having a curved tip protruding in the center. The plastic working is preferably micro-forming (form-rolling in which machining is performed by rotating a tool while pressing the tool against the sliding surface).

In both the working examples and comparative examples, the micro-recessed parts had a rectangular shape with a size of 80 µm × 320 µm. The area ratio was 5%, and the depth "t" of the micro-recessed parts was 3 µm. In the working and comparative examples, following the formation of the micro-recessed parts, the raised portions of the edges formed around the periphery of each micro-recessed part were removed using a tape-lapping film having a particle size of 9 µm. Then, the samples were tested.

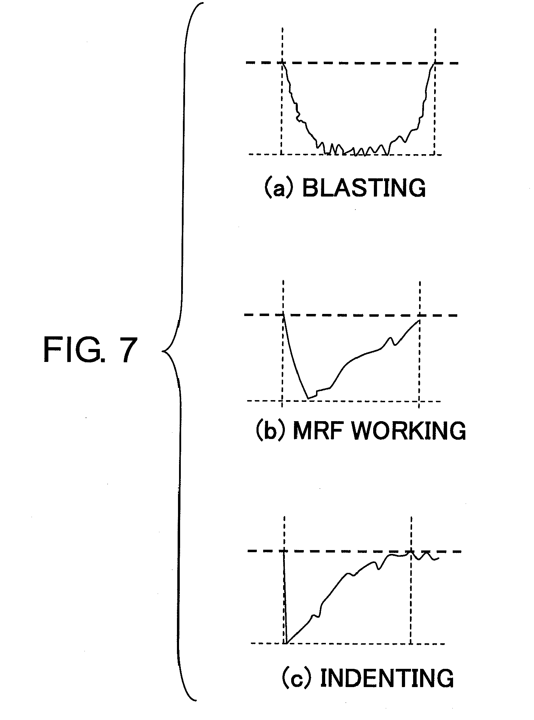

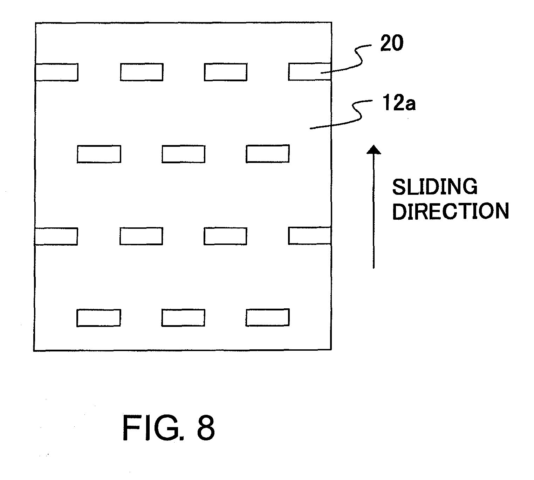

In the working examples, the S/L ratio was set in the range of 0 to 0.3. The results of an experiment concerning the relationship between the S/L ratio in the shape of the micro-recessed parts and the coefficient of friction will be indicated. Cross section (a) of Figure 7 is an actual measured cross-sectional shape of one of the micro-recessed parts manufactured using a blasting technique. Cross section (b) of Figure 7 is an actual measured cross-sectional shape of one of the micro-recessed parts manufactured using a metal removal fluid (MRF) working technique. Cross section (c) of Figure 7 is an actual measured cross-sectional shape of one of the micro-recessed parts manufactured using an indenting technique. Figure 8 shows the formation pattern of the micro-recessed parts 20 in the sliding surface 22 in which the micro-recessed parts 20 are formed (all of the micro-recessed parts of (a) through (c) shown in Figure 7 have the same pattern).

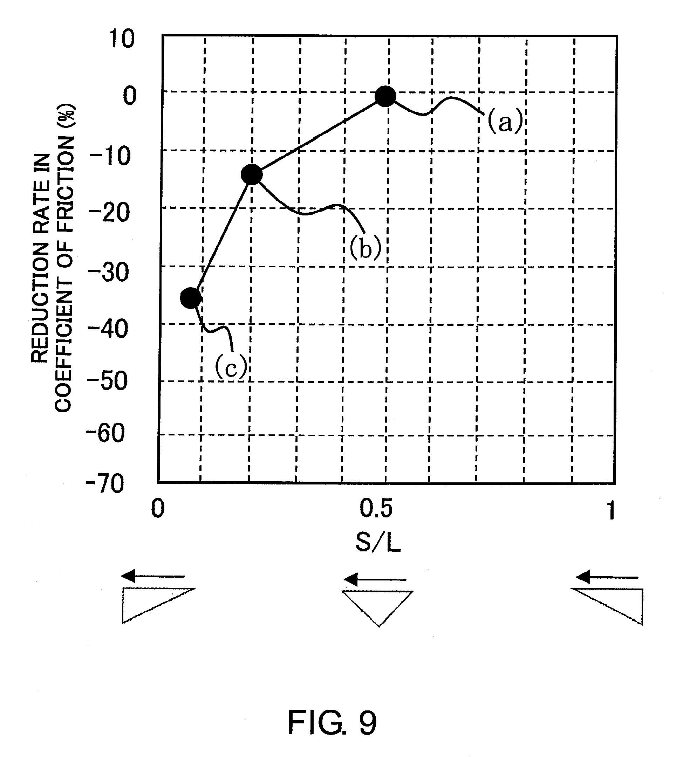

Figure 9 shows the relationship between the S/L ratio in the respective micro-recessed part shapes shown in Figure 7 and the reduction rate (%) in the coefficient of friction. In regard to the cross-sectional shapes of the micro-recessed parts shown in Figure 7, illustration (a) of Figure 7 shows a micro-recessed part in which S/L = 0.5 (manufactured by blasting), illustration (b) of Figure 7 shows a micro-recessed part in which the front end wall in the sliding direction is formed at an angle from the line perpendicular to the sliding surface so that S/L = 0.2 (manufactured by MRF working), and illustration (c) of Figure 7 shows a micro-recessed part in which the front end wall in the sliding direction is substantially perpendicular to the sliding surface so that S/L = approximately 0.1 or less (manufactured by indenting using an indenter). Furthermore, the reduction rate in the coefficient of friction shown in Figure 9 is the reduction rate with reference to a case in which S/L = 0.5.

In working examples 1 through 3, the bottom surfaces of the grooves in the rear portions of the micro-recessed parts in the sliding direction were formed with a shape that was recessed downward (see Figure 4), and the curvature radius was varied. The curvature radius in working example 1 was set at 250 µm, the curvature radius in working example 2 was set at 500 µm, and the curvature radius in working example 3 was set at 1000 µm.

In comparative example 1, the bottom surfaces of the grooves in the rear portions or the micro-recessed parts in the sliding direction were formed as flat surfaces (see Figure 5). Accordingly, the curvature radius R was infinitely large. In comparative example 2, the bottom surfaces of the grooves in the rear portions of the micro-recessed parts in the sliding direction were formed with a shape that protruded upward (negative curvature radius such as seen Figure 6).

Table 1 shows the values of the curvature radius R, the curvature (1/R) and the experimental results in the respective working examples and comparative examples.

**Table 1**

| | Curvature Radius | Curvature | Ratio of Coefficient of Friction |
|---|---|---|---|
| | R (µm) | (1/R) | (Relative to Comparative Example 1) |
| Working Example 1 | 250 | 0.004 | 0.75 |
| Working Example 2 | 500 | 0.002 | 0.87 |
| Working Example 3 | 1000 | 0.001 | 0.94 |
| Comparative Example 1 | ∞ | 0 | 1.00 |
| Comparative Example 2 | -500 | -0.002 | 1.13 |

First, it is seen from Table 1 that in working examples 1 to 3, with micro-recessed part of Figures 2 and 3, the coefficient of friction is reduced in all cases compared to the comparative examples. Furthermore, it is seen from the respective working examples that the coefficient of friction shows a tendency to become smaller as the value of the curvature radius R becomes smaller (i.e., as the curvature 1/R becomes larger). Thus, the coefficient of friction can be further reduced as the curvature radius of the bottom surfaces 22 is made smaller (i.e., as the curvature 1/R is increased).

Table 2 shows film thickness h of viscous fluid with respect to the depth of the micro-recessed parts 20 for the experimental results in the respective working examples and comparative examples.

**Table 2**

| | Film Thickness h of Viscous Fluid (µm) | Depth t of Micro-recessed parts (µm) | h/t |
|---|---|---|---|
| Working Example 1 | 3.00 | 3 | 1.000 |
| Working Example 2 | 2.60 | 3 | 0.867 |
| Working Example 3 | 2.40 | 3 | 0.800 |
| Comparative Example 1 | 2.25 | 3 | 0.750 |
| Comparative Example 2 | 2.00 | 3 | 0.667 |

Next, it is seen from Figure 9 that the coefficient of friction is reduced as the value of the S/L ratio becomes smaller. In particular, in the vicinity of the S/L ratio = 0.3, the reduction rate is approximately 10%, and it is seen that there is a substantial effect in reducing the coefficient of friction at S/L = 0.3. Furthermore, it is seen that at S/L = 0.2 or less, the slope of the reduction rate is greater than in the range of S/L = 0.5 to 0.3, and that the effect in reducing the coefficient of friction is increased. Accordingly, the value of S/L is advantageously 0.2 or less, and is even more advantageously 0.1 or less.

The mechanism whereby the coefficient of friction is reduced in such a sliding member is currently unclear. However, this mechanism is surmised to be as follows: namely, as a result of micro-recessed parts being formed in the sliding direction, the mean thickness of the oil film is increased by an amount equal to the micro-recessed parts compared to a flat, smooth surface in which no micro-recessed parts are formed. Thus, an effect that reduces the mean shear rate is created. Furthermore, by making the wall surfaces of the micro-recessed parts on the forward edge in the sliding direction (direction perpendicular to the sliding direction) steep, i.e., as close to perpendicular as possible, and forming the bottom surfaces of the grooves in the rear portions of the micro-recessed parts in the sliding direction with a shape that is concaved downward relative to the outer sliding surface, it is possible to cause a greater amount of lubricating oil to flow into the interface between the sliding parts. Moreover, it appears that by also creating a microscopic dynamic pressure effect based on the micro-recessed parts, it is possible to achieve a friction-reducing effect under broader operating conditions.

Thus, by setting the shape of very fine micro-recessed parts formed in the sliding surface of a sliding member that is caused to slide in one direction with a viscous fluid interposed between this sliding member and another sliding member so that the S/L ratio is 0 to 0.3, and so that the bottom surfaces of the grooves in the rear portions in the sliding direction have a shape that is recessed downward (concaved), it is possible to achieve a reduction in the coefficient of friction and an improvement in the sliding characteristics. In this way, the oil film can also be maintained at a high thickness value, and the resistance to wear and resistance to burning can be improved.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application Nos. 2006-170305, filed 20th June 2006, and 2007-107141, filed 16th April 2007, the contents of which are expressly incorporated herein by reference.

## Claims

1. An apparatus comprising:
a first sliding member having a sliding surface and a plurality of recesses with bottom surfaces having a maximum depth point with respect to the sliding surface:
wherein each of the recesses has an S/L ratio of 0 to 0.3, where L is an overall length of the recess in a sliding direction and S is a length from a forward edge of the recess to the maximum depth point.

2. An apparatus as claimed in claim 1 wherein each of the bottom surfaces comprises a concaved portion extending rearward with respect to a sliding direction from the maximum depth point.

3. An apparatus as claimed in claim 1 or claim 2, wherein the recesses have a width perpendicular to the sliding direction that is longer than the overall length in the sliding direction.

4. An apparatus as claimed in any preceding claim wherein the sliding surface occupies a first surface area and the recesses occupy a second surface area such that a ratio of the second surface to the first surface area is in the range 0.5% to 10%.

5. An apparatus as claimed in any preceding claim comprising a second sliding member having a mating sliding surface, the sliding surface of the first sliding member being formed of material with a higher hardness value than a material of the mating sliding surface of the second sliding member.

6. An apparatus as claimed in any preceding claim wherein the cross-sectional shapes of the recesses are such that a ratio h/t is in the range 0.04 to 5, where t is a maximum depth of the recesses and h is a film thickness of a viscous fluid formed during sliding of the sliding surface of the first sliding member.

7. An apparatus as claimed in claim 2 or any claim dependent on claim 2 wherein the concaved portion of the recesses are formed by plastic deformation of the sliding surface with a tool having a tip that protrudes in a center.

8. An internal combustion engine having an apparatus as claimed in any preceding claim, wherein the first sliding member is a sliding part in the internal combustion engine.

9. A transmission having an apparatus as claimed in any preceding claim, wherein the first sliding member is a sliding part in the transmission.

10. A vehicle having an apparatus, an engine or a transmission as claimed in any preceding claim.
